# EUROPEAN PATENT APPLICATION

(11) **EP 4 624 367 A1**
(43) Date of publication of application: **01.10.2025**
(21) Application number: 23929879.7
(22) Date of filing: 16.10.2023
(51) Int. Cl.: B65G 1/04, G06Q 10/08

(54) **COMPARTMENT ALLOCATION METHOD, ITEM DISTRIBUTION METHOD, APPARATUS, DEVICE, AND MEDIUM**

(30) Priority: 30.03.2023 CN 202310331218
(71) Applicant: Beijing Jingdong Qianshi Technology Co., Ltd., Beijing 100176 (CN)
(72) Inventor: SHANG, Chunpeng, Beijing 100176 (CN)
(74) Representative: Page White Farrer
(86) International application number: PCT/CN2023/124775
(87) International publication number: WO 2024/198306

(57) **Abstract**

This disclosure relates to a compartment distribution method, article distribution method, device, apparatus and medium. This method comprises: obtaining (102) an article information of a first article, wherein the first article (102) is not assigned a compartment unit, and the article information includes a storage position (103) of the article; determining a storage position (105) of a second article (104) based on an article information of a second article (104), wherein the second article (104) has been assigned a compartment unit; distributing a compartment unit (106) for the first article (102) and making the compartment unit (106) corresponding to the first article (102) adjacent to the compartment unit (106) corresponding to the second article (104) in response to determining that the compartment unit (106) corresponding to the first article (102) is adjacent to the storage position corresponding to the second article (104).

## Description

### CROSS-REFERENCE TO RELATED APPLICATIONS

This application claims priority to Chinese Patent Application No. 202310331218.4, filed on Mar. 30, 2023, titled "Compartment distribution method, article distribution method, device, apparatus and medium", the disclosure of which is hereby incorporated herein as a whole.

### TECHNICAL FIELD

The embodiments of this disclosure relate to an automatic distribution wall, in particular a compartment distribution method, article distribution method, device, apparatus and medium.

### BACKGROUND ART

At present, customer returns often occur on various e-commerce platforms. When a customer initiates the return of goods, warehouse personnel distribute the goods to be distributed back to their original storage positions by means of compartment distribution. For the distribution of compartments, the usual method is to randomly distribute compartments to the goods to be distributed for the goods that do not have corresponding compartments.

However, when the above method is used to distribute the compartments, the following technical problem often exists: it is more troublesome for the relevant staff to change the containers at the compartments, which makes the handling of the articles inefficient.

### CONTENTS OF THE INVENTION

The content portion of this disclosure is intended to introduce concepts in brief form, and these concepts will be described in detail in the specific embodiment that follow. The content portion of this disclosure is not intended to determine key or essential features of the claimed technical solution, nor is it intended to be used to limit the protection scope of the claimed technical solution.

Some embodiments of this disclosure provide a compartment distribution method, article distribution method, device, apparatus and medium to solve the technical problem mentioned in the background art.

In the first aspect, some embodiments of this disclosure provides a method for distributing compartments of an automatic distribution wall, comprising: obtaining an article information of a first article, wherein the first article is not assigned a compartment unit, and the article information includes a storage position of the article; determining a storage position of a second article based on an article information of a second article, wherein the second article has been assigned a compartment unit; distributing a compartment unit for the first article and making the compartment unit corresponding to the first article adjacent to the compartment unit corresponding to the second article in response to determining that the first article is adjacent to the storage position corresponding to the second article.

According to some embodiments of this disclosure, the abovementioned storage position includes: at least one of a shelf aisle and an article storage position; and the above-mentioned step of distributing a compartment unit for the first article and making the compartment unit corresponding to the first article adjacent to the compartment unit corresponding to the second article in response to determining that the first article is adjacent to the compartment unit corresponding to the second article comprises: distributing a compartment unit for the first article and making the compartment unit corresponding to the first article adjacent to the compartment unit corresponding to the second article in response to determining that the first article is adjacent to the shelf aisle corresponding to the second article and/or the first article is adjacent to the article storage position corresponding to the second article.

According to some embodiments of this disclosure, the above-mentioned compartment unit comprises a set of compartments; and the step of distributing a compartment unit for the first article and making the compartment unit corresponding to the first article adjacent to the compartment unit corresponding to the second article in response to determining that the first article is adjacent to the storage position corresponding to the second article comprises: determining at least one compartment unit adjacent to the compartment unit corresponding to the second article; for each of the at least one compartment units, performing the following distribution steps: determining the compartment set corresponding to the compartment unit as a first target compartment set; determining a first target compartment subset satisfying a preset storage condition in response to determining that there exist compartments within the first target compartment set whose article storage status satisfies a preset storage condition; distributing a compartment unit for the first article and making the compartment unit corresponding to the first article adjacent to the compartment unit corresponding to the second article according to the at least one first determined target compartment subset.

According to some embodiments of this disclosure, the plurality of compartment units corresponding to a warehouse are divided by the following steps: performing preliminary grouping on a set of shelf aisles according to the shelf layout of the warehouse to obtain a set of shelf aisle groups; for each shelf aisle group in the set of shelf aisle groups, performing the following determination steps: determining the proportion of articles to be distributed corresponding to the shelf aisle group; determining whether to adjust the aisles in the shelf aisle group according to the proportion of articles to be distributed; in response to determining not to adjust, determining the number of compartments for the shelf aisle group as a target compartment number according to the proportion of articles to be distributed; determining at least one target compartment as a compartment unit, wherein the number of compartments corresponding to the at least one target compartment is the number of the target compartments.

According to some embodiments of this disclosure, after the step of determining the number of compartments for the shelf aisle group as a target compartment number according to the proportion of articles to be distributed in response to determining not to adjust, the method further comprises the following steps: in response to determining to adjust and determining that the proportion of articles to be distributed is greater than a first predetermined proportion, performing aisle area splitting or aisle division on the shelf aisle group to obtain at least one shelf aisle splitting area, wherein the proportion of articles to be distributed corresponding to each shelf aisle splitting area is between a second predetermined proportion and the first predetermined proportion, and the first predetermined proportion is greater than the second predetermined proportion; in response to determining to adjust and determining that the proportion of articles to be distributed is less than the second predetermined proportion, merging the shelf aisle group with an adjacent shelf aisle group such that the proportion of articles to be distributed corresponding to the merged aisle group is between the second predetermined proportion and the first predetermined proportion.

According to some embodiments of this disclosure, the above-mentioned step of determining the proportion of articles to be distributed corresponding to the shelf aisle group comprises: determining a total number of articles to be distributed; generating an initial proportion of articles to be distributed corresponding to the shelf aisle group based on the number of articles to be distributed corresponding to the shelf aisle group and the total number of articles to be distributed; determining the article volume of each article to be distributed in the respective set of articles to be distributed to obtain a set of article volumes; adjusting the initial proportion of articles to be distributed based on the set of article volumes to obtain an adjusted proportion of articles to be distributed, as the target proportion of articles to be distributed.

According to some embodiments of this disclosure, the abovementioned method further comprises: in response to determining that the first article and the second article belong to the same category, determining whether there is a target compartment in the second target compartment set, whose compartment storage number is less than the corresponding preset number, wherein the second target compartment set is associated with the compartment unit corresponding to the second article; determining the compartment unit corresponding to the second article as the compartment unit corresponding to the first article in response to determining there is the target compartment, and distributing the compartment for the first article based on the determined at least one target compartment.

In the second aspect, some embodiments of this disclosure provides a compartment distribution device for an automatic distribution wall, comprising: a first acquisition unit configured to obtain an article information of a first article, wherein the first article is not assigned a compartment unit, and the article information includes a storage position of the article; a first determination unit configured to determine a storage position of a second article based on an article information of a second article, wherein the second article has been assigned a compartment unit; an distribution unit configured to distribute a compartment unit for the first article and making the compartment unit corresponding to the first article adjacent to the compartment unit corresponding to the second article in response to determining that the first article is adjacent to the storage position corresponding to the second article.

According to some embodiments of this disclosure, the abovementioned storage position includes: at least one of a shelf aisle and an article storage position; and the distribution unit can be configured to distribute a compartment unit for the first article and make the compartment unit corresponding to the first article adjacent to the compartment unit corresponding to the second article in response to determining that the first article is adjacent to the shelf aisle corresponding to the second article and/or the first article is adjacent to the article storage position corresponding to the second article.

According to some embodiments of this disclosure, the above-mentioned compartment unit comprises a set of compartments; and the distribution unit can be configured to: determine at least one compartment unit adjacent to the compartment unit corresponding to the second article; for each of the at least one compartment units, perform the following distribution steps: determine the compartment set corresponding to the compartment unit as a first target compartment set; determine a first target compartment subset satisfying a preset storage condition in response to determining that there exist compartments within the first target compartment set whose article storage status satisfies a preset storage condition; distribute a compartment unit for the first article and making the compartment unit corresponding to the first article adjacent to the compartment unit corresponding to the second article according to the at least one first determined target compartment subset.

According to some embodiments of this disclosure, the device further comprises a fourth determination unit and a compartment distribution unit, wherein the fourth determination unit is configured to: in response to determining that the first article and the second article belong to the same category, determine whether there is a target compartment in the second target compartment set, whose compartment storage number is less than the corresponding preset number, wherein the second target compartment set is associated with the compartment unit corresponding to the second article; wherein the compartment distribution unit is configured to: determine the compartment unit corresponding to the second article as the compartment unit corresponding to the first article in response to determining there is the target compartment, and distribute the compartment for the first article based on the determined at least one target compartment.

In the third aspect, some embodiments of this disclosure provide a method for distributing articles to an automatic distribution wall, comprising: obtaining articles to be distributed, wherein the shelf aisle corresponding to the articles to be distributed is the target shelf aisle; determining an adjacent shelf aisle set adjacent to the location of the target shelf aisle in response to determining that there is no corresponding compartment set for the target shelf aisle; determining the compartment corresponding to the adjacent shelf aisle in the adjacent shelf aisle set, as the third target compartment, to obtain the third target compartment set; in response to determining that there is at least one adjacent compartment in the adjacent compartment set, whose number of articles in the respective container satisfies a predetermined number condition, performing the distribution processing on the articles to be distributed according to the at least one adjacent compartment, wherein the adjacent compartment set is a set of compartments adjacent to each of the third target compartments in the third target compartment set.

According to some embodiments of this disclosure, the method further comprises: screening the corresponding compartment set to determine compartments where the number of distributed articles included in the corresponding container is less than a predetermined number of compartments, to obtain at least one compartment, in response to determining that there is corresponding compartment set for the target shelf aisle; performing the distribution processing on the articles to be distributed according to the at least one compartment.

According to some embodiments of this disclosure, the above-mentioned method further comprises: in response to determining that there is no at least one adjacent compartment, whose number of articles in the respective container satisfies a predetermined number condition, determining the proportion of articles to be distributed corresponding to the target shelf aisle; determining the number of article distribution compartments corresponding to the target shelf aisle according to the proportion of articles to be distributed; determining a subset of article distribution compartments from the set of article distribution compartments included by the respective container where the distributed articles are empty as the article distribution compartments corresponding to the articles to be distributed, wherein the number of article distribution compartments included in the article distribution compartment subset corresponds to the number of article distribution compartments; and performing the distribution processing on the articles to be distributed based on the article distribution compartment subset.

According to some embodiments of this disclosure, the above-mentioned step of determining the proportion of articles to be distributed corresponding to the target shelf aisle comprises: performing grouping on a set of shelf aisles according to the shelf layout of the warehouse to obtain a set of shelf aisle groups; determining the number of articles to be distributed corresponding to each shelf aisle group in the set of shelf aisle groups; determining the shelf aisle group to which the target shelf aisle belongs, as the target shelf aisle group; determining the proportion of articles to be distributed corresponding to the target shelf aisle group according to the number of articles to be distributed corresponding to the target shelf aisle group as target proportion of the articles to be distributed; determining the proportion of articles to be distributed corresponding to the target shelf aisle according to the target proportion of the articles to be distributed.

According to some embodiments of this disclosure, the above-mentioned step of determining the proportion of articles to be distributed corresponding to the target shelf aisle group according to the number of articles to be distributed corresponding to the target shelf aisle group as target proportion of the articles to be distributed comprises: determining a total number of articles to be distributed; generating an initial proportion of articles to be distributed corresponding to the target shelf aisle group based on the number of articles to be distributed corresponding to the target shelf aisle group and the total number of articles to be distributed; determining the article volume of each article to be distributed in the set of articles to be distributed to obtain a set of article volumes, wherein there is an article association relationship between the set of articles to be distributed and the target shelf aisle group; adjusting the initial proportion of articles to be distributed based on the set of article volumes to obtain an adjusted proportion of articles to be distributed, as the target proportion of articles to be distributed.

According to some embodiments of this disclosure, the above-mentioned step of determining the proportion of articles to be distributed corresponding to the target shelf aisle according to the target proportion of the articles to be distributed comprises: in response to determining that the target proportion of articles to be distributed is greater than a first predetermined proportion, performing splitting process on the shelf aisle group to obtain at least two shelf aisle subgroups, wherein the proportion of articles to be distributed corresponding to each warehouse aisle subgroup is less than the first predetermined proportion and greater than the second predetermined proportion; determining the shelf aisle subgroup to which the target shelf aisle belongs, as the target shelf aisle subgroup; determining the proportion of returned articles corresponding to the target shelf aisle subgroup as the proportion of the articles to be distributed corresponding to the target shelf aisle.

According to some embodiments of this disclosure, the above-mentioned method further comprises: determining an adjacent shelf aisle set adjacent to the location of the target shelf aisle group in response to determining that the target proportion of articles to be distributed is less than the first predetermined proportion; determining the adjusted proportion of articles to be distributed corresponding to each adjacent shelf aisle group in the set of adjacent shelf aisle groups, as the adjusted proportion of the adjacent articles to be distributed, so as to obtain a set of adjusted proportions of the adjacent articles to be distributed; adding the target proportion of articles to be distributed to each adjusted proportion of the adjacent articles to be distributed in the set of adjusted proportions of the adjacent articles to be distributed to generate a summed proportion; screening the set of adjacent shelf aisle groups to determine the adjacent shelf aisle groups whose corresponding summed proportion is greater than the second predetermined proportion and less than the summed proportion to obtain at least one adjacent shelf aisle group; adding the target shelf aisle group to any one of the at least one adjacent shelf aisle group to obtain an added shelf aisle group; determining the proportion of articles to be distributed corresponding to the added shelf aisle group as the proportion of the articles to be distributed corresponding to the target shelf aisle.

In the fourth aspect, some embodiments of this disclosure provide an article distribution device for an automatic distribution wall, comprising: a second acquisition unit configured to obtain articles to be distributed, wherein the shelf aisle corresponding to the articles to be distributed is the target shelf aisle; a second determination unit configured to determine an adjacent shelf aisle set adjacent to the location of the target shelf aisle in response to determining that there is no corresponding compartment set for the target shelf aisle; a third determination unit configured to determine the compartment corresponding to the adjacent shelf aisle in the adjacent shelf aisle set, as the third target compartment, to obtain the third target compartment set; a distribution unit configured to perform the distribution processing on the articles to be distributed according to the at least one adjacent compartment in response to determining that there is at least one adjacent compartment in the adjacent compartment set, whose number of articles in the respective container satisfies a predetermined number condition, wherein the adjacent compartment set is a set of compartments adjacent to each of the third target compartments in the third target compartment set.

According to some embodiments of this disclosure, the device further comprises a screening unit and a first distribution processing unit. The screening unit is configured to screen the corresponding compartment set to determine compartments where the number of distributed articles included in the corresponding container is less than a predetermined number, to obtain at least one compartment, in response to determining that there is corresponding compartment set for the target shelf aisle; the first distribution processing unit is configured to perform the distribution processing on the articles to be distributed according to the at least one compartment.

According to some embodiments of this disclosure, the device further comprises a fifth determination unit, a sixth determination unit, a seventh determination unit and a second distribution processing unit. The fifth determination unit is configured to, in response to determining that there is no at least one adjacent compartment, whose number of articles in the respective container satisfies a predetermined number condition, determine the proportion of articles to be distributed corresponding to the target shelf aisle; the sixth determination unit is configured to determine the number of article distribution compartments corresponding to the target shelf aisle according to the proportion of articles to be distributed; the seventh determination unit is configured to determine a subset of article distribution compartments from the set of article distribution compartments included by the respective container where the distributed articles are empty as the article distribution compartments corresponding to the articles to be distributed, wherein the number of article distribution compartments included in the article distribution compartment subset corresponds to the number of article distribution compartments; and the second distribution processing unit is configured to perform the distribution processing on the articles to be distributed based on the article distribution compartment subset.

According to some embodiments of this disclosure, the fifth determination unit is configured to: perform grouping on a set of shelf aisles according to the shelf layout of the warehouse to obtain a set of shelf aisle groups; determine the number of articles to be distributed corresponding to each shelf aisle group in the set of shelf aisle groups; determine the shelf aisle group to which the target shelf aisle belongs, as the target shelf aisle group; determine the proportion of articles to be distributed corresponding to the target shelf aisle group according to the number of articles to be distributed corresponding to the target shelf aisle group as target proportion of the articles to be distributed; determine the proportion of articles to be distributed corresponding to the target shelf aisle according to the target proportion of the articles to be distributed.

According to some embodiments of this disclosure, the fifth determination unit is configured to: determine a total number of articles to be distributed; generate an initial proportion of articles to be distributed corresponding to the target shelf aisle group based on the number of articles to be distributed corresponding to the target shelf aisle group and the total number of articles to be distributed; determine the article volume of each article to be distributed in the set of articles to be distributed to obtain a set of article volumes, wherein there is an article association relationship between the set of articles to be distributed and the target shelf aisle group; adjust the initial proportion of articles to be distributed based on the set of article volumes to obtain an adjusted proportion of articles to be distributed, as the target proportion of articles to be distributed.

According to some embodiments of this disclosure, the fifth determination unit is configured to: in response to determining that the target proportion of articles to be distributed is greater than a first predetermined proportion, perform splitting processing on the shelf aisle group to obtain at least two shelf aisle subgroups, wherein the proportion of articles to be distributed corresponding to each warehouse aisle subgroup is less than the first predetermined proportion and greater than the second predetermined proportion; determine the shelf aisle subgroup to which the target shelf aisle belongs, as the target shelf aisle subgroup; determine the proportion of returned articles corresponding to the target shelf aisle subgroup as the proportion of the articles to be distributed corresponding to the target shelf aisle.

According to some embodiments of this disclosure, the fifth determination unit is configured to: determine an adjacent shelf aisle set adjacent to the location of the target shelf aisle group in response to determining that the target proportion of articles to be distributed is less than the first predetermined proportion; determine the adjusted proportion of articles to be distributed corresponding to each adjacent shelf aisle group in the set of adjacent shelf aisle groups, as the adjusted proportion of the adjacent articles to be distributed, so as to obtain a set of adjusted proportions of the adjacent articles to be distributed; add the target proportion of articles to be distributed to each adjusted proportion of the adjacent articles to be distributed in the set of adjusted proportions of the adjacent articles to be distributed to generate a summed proportion; screen the set of adjacent shelf aisle groups to determine the adjacent shelf aisle groups whose corresponding summed proportion is greater than the second predetermined proportion and less than the summed proportion to obtain at least one adjacent shelf aisle group; add the target shelf aisle group to any one of the at least one adjacent shelf aisle group to obtain an added shelf aisle group; determine the proportion of articles to be distributed corresponding to the added shelf aisle group as the proportion of the articles to be distributed corresponding to the target shelf aisle.

In the fifth aspect, some embodiments of this disclosure provide an electronic apparatus, comprising: one or more processors; a storage device, on which one or more programs are stored, when the one or more programs are executed on one or more processors, the one or more processors are configured to perform the method described in any one of the embodiments in the first and third aspects.

In the sixth aspect, some embodiments of this disclosure provide a computer-readable medium, on which a computer program is stored, wherein when the computer program is executed by a processor, the method as described in any one of the embodiments in the first and third aspects.

In the seventh aspect, some embodiments of this disclosure provide a computer program product, comprising a computer program, wherein when the computer program is executed by a processor, the method as described in any one of the embodiments in the first aspect.

The above various embodiments of this disclosure have the following beneficial effects: through the method for distributing compartments of an automatic distribution wall in some embodiments of this disclosure, the handling efficiency of articles can be improved by precisely distributing the compartments. Specifically, the reason for the low handling efficiency is as below: it is more troublesome for the relevant staff to change the containers at the compartments, which makes the handling of the articles inefficient. On this basis, in the method for distributing compartments of an automatic distribution wall in some embodiments of this disclosure, first of all, the article information of the first article is obtained. The first article therein is not assigned a compartment unit, and the article information includes a storage position of the article. Here, the article information of the first article is obtained for subsequent compartment distribution for the first article. Then, a storage position of a second article is determined based on an article information of a second article. The second article therein has been assigned a compartment unit. Here, the article information of the second article is obtained for subsequent compartment distribution for the second article. Finally, in response to determining that the first article is adjacent to the storage position corresponding to the second article, the first article is assigned to a compartment unit and the compartment unit corresponding to the first article is enabled to be adjacent to the compartment unit corresponding to the second article. In summary, through the article information of the article that has been assigned to a compartment unit, the article to be distributed is distributed to a corresponding compartment unit, so that the compartment unit corresponding to the article to be distributed is adjacent to the compartment unit that has the adjacent storage position and has been distributed with an article. In this way, it is convenient for the relevant staff to change the containers at the compartments and to return articles in position, which indirectly improves the article handling efficiency.

### BRIEF DESCRIPTION OF THE DRAWINGS

The above-mentioned and other features, advantages and aspects of various embodiments of this disclosure will be more obvious from the following detailed embodiments by reference to the accompanying drawings. Throughout the accompanying drawings, the same or similar elements are represented by the same or similar reference signs. It is to be understood that the drawings are schematic and that components and elements are not necessarily drawn to scale.
Fig. 1 shows a schematic view of a method for distributing compartments of an automatic distribution wall according to some embodiments of this disclosure;
Fig. 2 shows a flowchart of some embodiments of a method for distributing compartments of an automatic distribution wall according to this disclosure;
Fig. 3 shows a schematic view of aisle division in some embodiments of a compartment distribution method according to this disclosure;
Fig. 4 shows a schematic view of aisle area division in some embodiments of a compartment distribution method according to this disclosure;
Fig. 5 shows a flowchart of some other embodiments of a method for distributing compartments of an automatic distribution wall according to this disclosure;
Fig. 6 shows a flowchart of some embodiments of a method for distributing articles to an automatic distribution wall according to this disclosure;
Fig. 7 shows a schematic view of shelf aisles in some embodiments of an article distribution method according to this disclosure;
Fig. 8 shows a schematic view of adjacent shelf aisle sets in some embodiments of an article distribution method according to this disclosure;
Fig. 9 shows a structural schematic view of some embodiments of a compartment distribution device for an automatic distribution wall according to this disclosure;
Fig. 10 shows a structural schematic view of some embodiments of an article distribution device for an automatic distribution wall according to this disclosure;
Fig. 11 is a structural schematic view of an electronic apparatus suitable for implementing some embodiments of this disclosure.

### DETAILED DESCRIPTION OF THE EMBODIMENTS

The embodiments of this disclosure will be described in more detail with reference to the accompanying drawings below. Although certain embodiments of the present disclosure are shown in the accompanying drawings, it should be understood that this disclosure may be implemented in various forms and should not be construed as being limited to the embodiments set forth herein. In contrary, these embodiments are provided in order to understand this disclosure more thoroughly and completely. It should be understood that the drawings and the embodiments of the present disclosure are for illustration purposes only and are not intended to limit the scope of the present disclosure.

It should also be noted that, for the convenience of description, only the parts related to the relevant invention are shown in the accompanying drawings. The embodiments in this disclosure and the features in the embodiments may be combined with each other without conflict.

It should be noted that the wordings "first", "second", and the like as mentioned in the present disclosure are only used for distinguishing different devices, modules or units, and are not used for limiting the sequence of the functions performed by these devices, modules or units or interdependence thereof.

It should be noted that definitions of "one" or "a plurality of" as mentioned in the present disclosure are intended to be exemplary rather than limiting, which shall be construed by those skilled in the art as "one or a plurality of", unless the context clearly indicates otherwise.

The names of messages or information exchanged between a plurality of devices in the embodiments of the present disclosure are for illustrative purposes only, and are not intended to limit the scope of the messages or information.

In this disclosure, for operations such as the collection, storage, and use of article information (such as return article information), before performing corresponding operations, relevant organizations or individuals shall fulfill obligations including conducting an article information security impact assessment, fulfilling the obligation to notify the subject of the article information, and obtaining the authorized consent of the subject of the article information in advance.

This disclosure will be described in detail below with reference to the accompanying drawings and in conjunction with the embodiments.

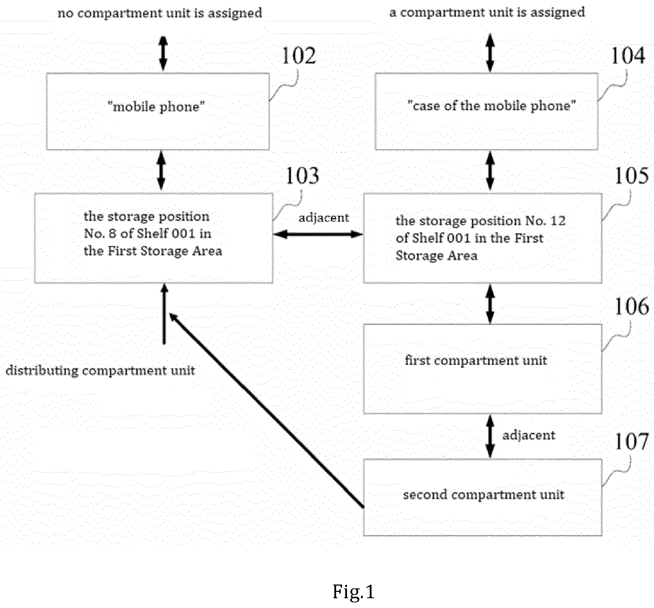

Fig. 1 shows a schematic view of an application scenario of a method for distributing compartments of an automatic distribution wall according to some embodiments of this disclosure.

In the application scenario of Fig. 1, first, the electronic apparatus 101 can obtain the article information of a first article 102. The first article therein is not assigned a compartment unit, and the article information includes a storage position 103 of the article. In this application scenario, the first article 102 may be a "mobile phone". The storage position 103 may be "the storage position No. 8 of Shelf 001 in the First Storage Area". Then, the electronic apparatus 101 can determine a storage position 105 of a second article 104 based on an article information of a second article 104. The second article 104 therein has been assigned a compartment unit. In this application scenario, the second article 104 may be a "case of the mobile phone". The storage position 105 may be "the storage position No. 12 of Shelf 001 in the First Storage Area". Finally, in response to determining that the first article 102 is adjacent to the storage position corresponding to the second article 104, the electronic apparatus 101 can distribute the first article 102 to a compartment unit and make the compartment unit corresponding to the first article 102 adjacent to the compartment unit 106 corresponding to the second article 104. In this application scenario, the compartment unit adjacent to the compartment unit 106 corresponding to the second article 104 may be a second compartment unit 107. That is, the compartment unit corresponding to the second article 102 may be a second compartment unit 107.

It should be noted that the aforesaid electronic apparatus may be a hardware or software. When the electronic apparatus is hardware, it can be implemented as a distributed cluster of multiple servers or terminal devices, or as a single server or a single terminal device. When the electronic apparatus is embodied as software, it can be mounted in the hardware devices listed above. It can be implemented, for example, as multiple software or software modules for providing distributed services, or as a single software or software module. No specific limitations are made here.

It should be understood that the number of electronic apparatuses in Fig. 1 is merely illustrative. Depending on the implementation needs, there may be any number of electronic apparatuses.

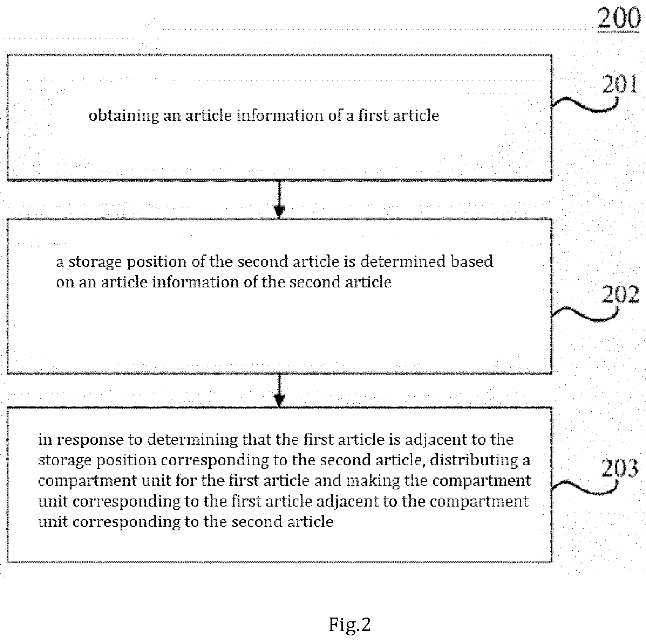

Now referring to Fig. 2, which shows a process 200 of some embodiments of a method for distributing compartments of an automatic distribution wall according to this disclosure. The compartment distribution method includes the steps of:
Step 201, obtaining an article information of a first article.

In some embodiments, the execution subject of the above-mentioned compartment distribution method (such as the electronic apparatus 101 shown in Fig. 1) can obtain the article information of the first article through a wired connection or a wireless connection. The first article therein has not been assigned a compartment unit. The above-mentioned article information includes a storage position of the article. The first article may be an article to be distributed. In practice, the first article may be a returned article. The compartment unit may be a compartment area with a compartment as basic unit. The at least one compartment corresponding to the compartment unit is used to store articles that have an association. The storage position of an article may be a location for storing the article. The above-mentioned article information may not only include a storage position of the article, but is not limited to at least one of the following: identification of the article, return time of the article, and category of the article.

In some alternative embodiments, the compartment units corresponding to a warehouse are divided by the following steps:
First step, performing a preliminary grouping on a set of shelf aisles according to the shelf layout of the warehouse to obtain a set of shelf aisle groups. The shelf layout can represent the layout information of each shelf in the warehouse.

As an example, the above-mentioned execution subject can group every three shelves in the set of shelf aisles according to the shelf layout in the warehouse, so as to generate a set of shelf aisle groups.

Second step, for each shelf aisle group in the set of shelf aisle groups, performing the following determination steps:
Substep 1: Determining the proportion of articles to be distributed corresponding to the shelf aisle group.

Each shelf aisle group has the respective proportion of articles to be distributed. The proportion of articles to be distributed can represent the number proportion of articles to be distributed corresponding to each shelf aisle group. For example, the proportion of articles to be distributed may be 31%.

As an example, firstly, the above execution subject can determine the total number of articles to be distributed. Then, the number of articles to be distributed corresponding to each shelf aisle group in the set of shelf aisle groups is determined so as to attain a set of numbers of the articles to be distributed. Next, individual numbers of individual articles to be distributed in the set of numbers of articles to be distributed are summed to obtain the summed number. Finally, the added number is divided by the total number of articles to be distributed to obtain the proportion of articles to be distributed corresponding to the shelf aisle group.

Substep 2: Determining whether to adjust the aisles in the shelf aisle group according to the proportion of articles to be distributed.

As an example, in response to the above execution subject who can determine that the proportion of articles to be distributed is greater than the target proportion, it is determined to adjust the aisles in the shelf aisle group. As an example, in response to the above execution subject who can determine that the proportion of articles to be distributed is less than or equal to the target proportion, it is not determined to adjust the aisles in the shelf aisle group. For example, the target proportion may be 70%.

Substep 3: in response to determining not to adjust, determining the number of compartments for the shelf aisle group as a target compartment number according to the proportion of articles to be distributed.

As an example, firstly, the above execution subject can obtain the total number of compartments. Then, the execution subject can multiply the total number of compartments by the proportion of articles to be distributed to attain the multiplication result, which is taken as the target number of compartments.

Substep 4: Determining at least one target compartment as a compartment unit. The number of compartments corresponding to the at least one target compartment therein is the target number of the compartments.

The positions of individual target compartments in the at least one target compartment are adjacent to each other.

In some embodiments, after the step of determining the number of compartments for the shelf aisle group as a target compartment number according to the proportion of articles to be distributed in response to determining not to adjust, this step further comprises:
The first step, in response to determining to adjust and determining that the proportion of articles to be distributed is greater than a first predetermined proportion, performing aisle area splitting or aisle division on the shelf aisle group to obtain at least one shelf aisle splitting area. The proportion of articles to be distributed corresponding to each shelf aisle splitting area therein is between a second predetermined proportion and the first predetermined proportion. The first predetermined proportion therein is greater than the second predetermined proportion. For example, the first predetermined proportion may be 70%. The second predetermined proportion may be 20%.

The aisle area splitting may be an areaal division of the area in which the aisle is located. The aisle division may be understood to divide a shelf aisle group into a plurality of shelf aisle subgroups.

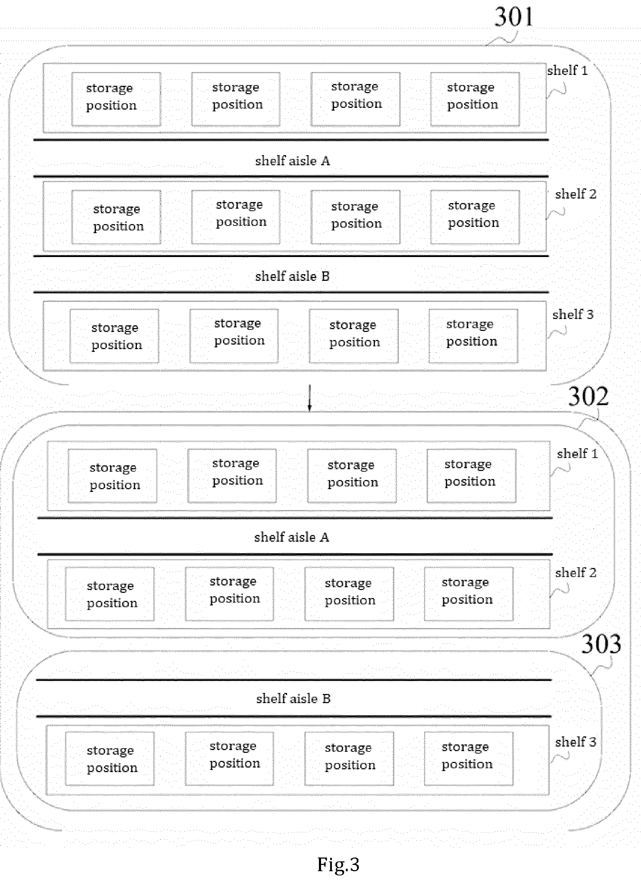

Referring to Fig. 3, an aisle division can be performed for a shelf aisle group 301 to attain a shelf aisle splitting area 302 and a shelf aisle splitting area 303.

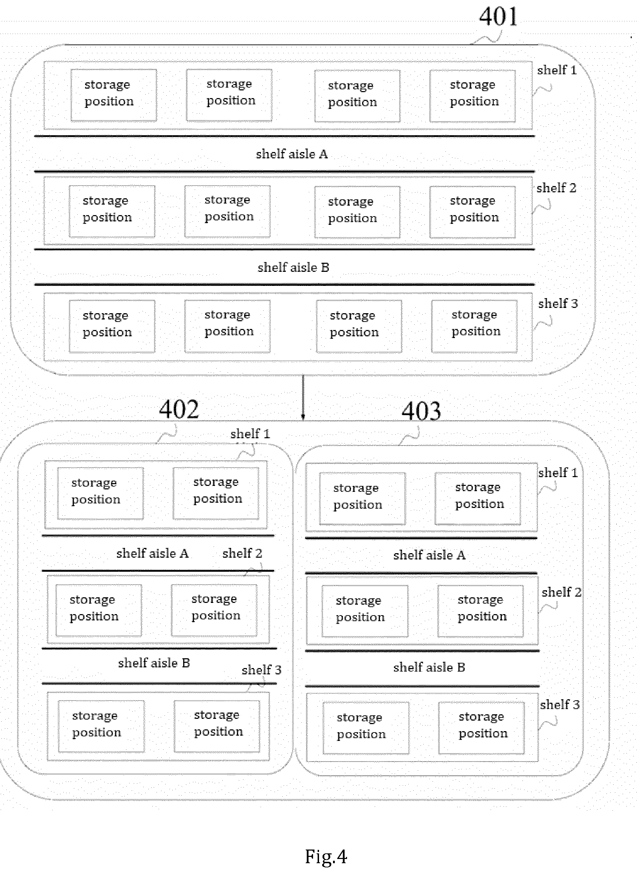

Referring to Fig. 4, an aisle area division can be performed for a shelf aisle group 401 to attain a shelf aisle splitting area 402 and a shelf aisle splitting area 403.

The second step, in response to determining to adjust and determining that the proportion of articles to be distributed is less than the second predetermined proportion, merging the shelf aisle group with an adjacent shelf aisle group such that the proportion of articles to be distributed corresponding to the merged aisle group is between the second predetermined proportion and the first predetermined proportion.

According to some embodiments of this disclosure, the steps further comprise:
The first step, the execution subject can multiply the proportion of articles to be distributed corresponding to the merged aisle group by the total number of the compartments to attain the multiplication result.

The second step, the aforesaid execution subject can determine the at least one associated compartment as the compartment unit corresponding to the merged aisle group. The number of compartments corresponding to the at least one associated compartment is the same as the multiplication result. The positions of individual associated compartments included in the at least one associated compartment are adjacent to each other.

In some alternative embodiments, the step of determining the proportion of articles to be distributed corresponding to the shelf aisle group can include the following steps:
The first step, determining a total number of articles to be distributed. The total number of articles to be distributed may be the number of articles corresponding to the set of articles to be distributed in the same period as the first article.

The second step, generating an initial proportion of articles to be distributed corresponding to the shelf aisle group based on the number of articles to be distributed corresponding to the shelf aisle group and the total number of articles to be distributed.

As an example, the execution subject can divide the proportion of articles to be distributed corresponding to the shelf aisle group by the total number of articles to be distributed to generate an initial proportion of articles to be distributed.

The third step, determining the article volume of each article to be distributed in the respective set of articles to be distributed to obtain a set of article volumes.

The fourth step, adjusting the initial proportion of articles to be distributed based on the set of article volumes to obtain an adjusted proportion of articles to be distributed, as the target proportion of articles to be distributed.

As an example, firstly, the above execution subject can determine the coefficient information corresponding to the set of article volumes. Then, the coefficient information is multiplied by the proportion of articles to be distributed to generate a target proportion of articles to be distributed. The average value of the article volume corresponding to the set of article volumes has corresponding coefficient information.

Step 202, a storage position of the second article is determined based on an article information of the second article.

In some embodiments, the execution subject can determine the storage position of the second article based on the article information of the second article. The second article therein has been assigned a compartment unit. The article information of the second article may include: a storage position of the second article, the identification of the second article, return time of the second article, and the category of the second article. The storage position of the second article may be a location for storing the second article.

Step 203, in response to determining that the first article is adjacent to the storage position corresponding to the second article, distributing a compartment unit for the first article and making the compartment unit corresponding to the first article adjacent to the compartment unit corresponding to the second article.

In some embodiments, in response to determining that the first article is adjacent to the storage position corresponding to the second article, the execution subject can distribute a compartment unit for the first article and make the compartment unit corresponding to the first article adjacent to the compartment unit corresponding to the second article.

For instance, the compartment unit corresponding to the first article is "unit 1". The compartment unit corresponding to the second article is "unit 2". The compartment "unit 1" and "unit 2" are adjacent to each other.

In some alternative embodiments, the storage position includes: at least one of a shelf aisle and an article storage position. The shelf aisle therein may be an aisle between the shelfs in the warehouse. **In** practice, shelf aisles may be shelf aisle identifier. The specific representative form will not be elaborated further. Similarly, the storage position of an article may be a storage position of the article on the shelf. In practice, the storage position of an article may be an identifier of a storage position of the article. The specific representative form will not be elaborated further.

According to some embodiments of this disclosure, the execution subject can distribute a compartment unit for the first article and make the compartment unit corresponding to the first article adjacent to the compartment unit corresponding to the second article in response to determining that the first article is adjacent to the shelf aisle corresponding to the second article and/or the first article is adjacent to the article storage position corresponding to the second article.

In practice, "the first article is adjacent to the shelf aisle corresponding to the second article and/or the first article is adjacent to the article storage position corresponding to the second article" may include: the first article is adjacent to the shelf aisle corresponding to the second article, the first article is adjacent to the article storage position corresponding to the second article, the first article is not only adjacent to the shelf aisle corresponding to the second article, but also adjacent to the article storage position corresponding to the second article.

**In** some alternative embodiments, after the step 203, the steps further include:
The first step, in response to determining that the first article and the second article belong to the same category, determining whether there is a target compartment in the second target compartment set, whose compartment storage number is less than the corresponding preset number. The second target compartment set is associated with the compartment unit corresponding to the second article. In practice, the same category of articles can mean that the articles have the same article classification. The aforesaid predetermined number can be the number of articles that can be stored in the container corresponding to the respective compartment.

The second step, determining the compartment unit corresponding to the second article as the compartment unit corresponding to the first article in response to determining there is the target compartment, and distributing the compartment for the first article based on the determined at least one target compartment.

The above various embodiments of this disclosure have the following beneficial effects: through the method for distributing compartments of an automatic distribution wall in some embodiments of this disclosure, the handling efficiency of articles can be improved by precisely distributing the compartments. Specifically, the reason for the low handling efficiency is as below: it is more troublesome for the staff to change the containers at the compartments, which makes the handling of the articles inefficient. On this basis, in the method for distributing compartments of an automatic distribution wall in some embodiments of this disclosure, first of all, the article information of the first article is obtained. The first article therein is not assigned a compartment unit, and the article information includes a storage position of the article. Here, the article information of the first article is obtained for subsequent compartment distribution for the first article. Then, a storage position of a second article is determined based on an article information of a second article. The second article therein has been distributed to a compartment unit. Here, the article information of the second article is obtained for subsequent compartment distribution for the first article. Finally, in response to determining that the first article is adjacent to the compartment unit corresponding to the second article, the first article is distributed to a compartment unit and the compartment unit corresponding to the first article is enabled to be adjacent to the compartment unit corresponding to the second article. In summary, through the article information of the article that has been distributed to a compartment unit, the article to be distributed is distributed to a corresponding compartment unit, so that the compartment unit corresponding to the article to be distributed is adjacent to the compartment unit that has the adjacent storage position and has been distributed with an article. In this way, it is convenient for the relevant staff to change the containers at the compartments and to return articles in position, which indirectly improves the article handling efficiency.

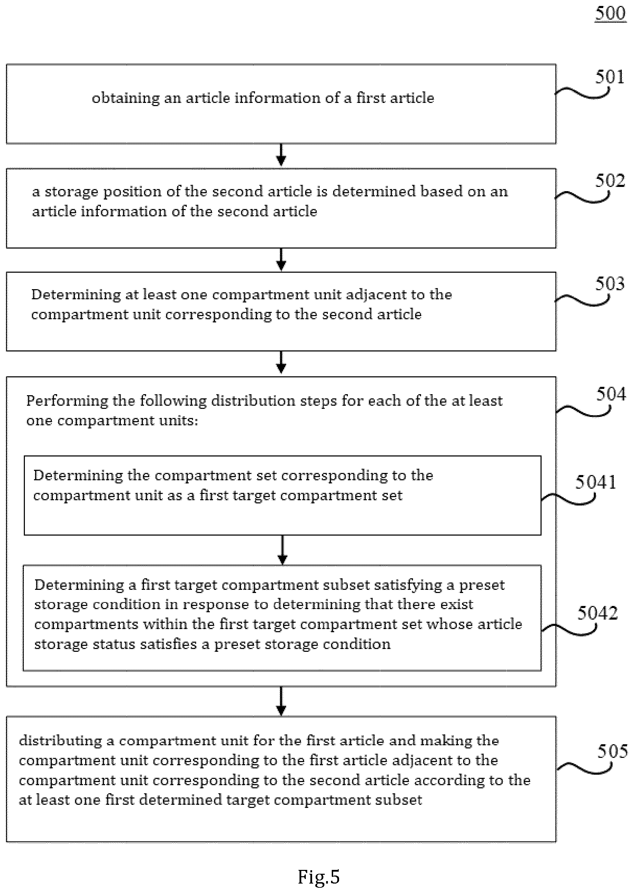

Now referring to Fig. 5, which shows a process 500 of some further embodiments of a method for distributing compartments of an automatic distribution wall according to this disclosure. The compartment distribution method includes the steps of:
Step 501, obtaining an article information of a first article.
Step 502, a storage position of the second article is determined based on an article information of the second article.
Step 503: Determining at least one compartment unit adjacent to the compartment unit corresponding to the second article.

In some embodiments, the execution subject of the compartment distribution method (such as the electronic device 101 as illustrated in Fig. 1) can determine at least one compartment unit adjacent to the compartment unit corresponding to the second article. The compartment unit comprises a set of compartments. In other words, the compartment unit comprises at least one compartment set.

Step 504: Performing the following distribution steps for each of the at least one compartment units:
Step 5041: Determining the compartment set corresponding to the compartment unit as a first target compartment set.

In some embodiments, the execution subject can determine the compartment set corresponding to the compartment unit as a first target compartment set.

Step 5042: Determining a first target compartment subset satisfying a preset storage condition in response to determining that there exist compartments within the first target compartment set whose article storage status satisfies a preset storage condition.

In some embodiments, in response to determining that there exist compartments within the first target compartment set whose article storage status satisfies a preset storage condition, the execution subject can determine a first target compartment subset that satisfies a preset storage condition. The article storage condition therein can refer to the situation of articles stored in the containers in the compartments. For example, the article storage situation may be that 30% of the articles are stored. The preset storage condition may be that the first target compartment is a compartment in the first target compartment set where the article storage situation does not reach the predetermined storage proportion.

Step 505: distributing a compartment unit for the first article and making the compartment unit corresponding to the first article adjacent to the compartment unit corresponding to the second article according to the at least one first determined target compartment subset.

In some embodiments, the aforesaid execution subject can distribute a compartment unit for the first article and make the compartment unit corresponding to the first article adjacent to the compartment unit corresponding to the second article according to the at least one first determined target compartment subset.

As can be seen from Fig. 5, as compared with the description of some embodiments illustrated by Fig. 2, the process 500 of the method for distributing compartments of an automatic distribution wall in some embodiments as illustrated by Fig. 5 more prominently highlights the specific steps of how the first article is specifically distributed to the compartment units. In this way, this disclosure can further improve the handling efficiency of articles through the exact distribution of compartments.

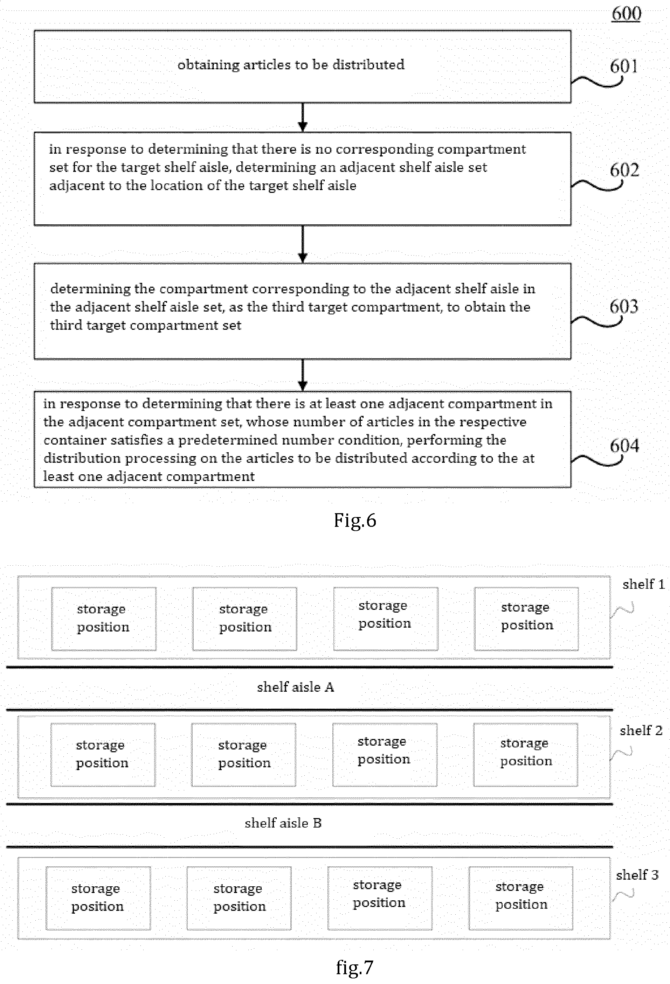

Now referring to Fig. 6, which shows a process 600 of some embodiments of a method for distributing articles to an automatic distribution wall according to this disclosure. This method includes the steps of:
Step 601, obtaining articles to be distributed.

In some embodiments, the execution subject (such as the electronic apparatus) of the above-mentioned method can distribute the articles to be distributed through a wired connection or a wireless connection. The articles to be distributed may refer to the articles that are to be subjected to the distribution process. The shelf aisle corresponding to the articles to be distributed is the target shelf aisle. The target shelf aisle therein can be the aisle between two rows of shelves in the warehouse, which is associated with the storage position corresponding to the articles to be distributed.

As an example, referring to Fig. 7, a schematic view of a shelf aisle is shown.

The open space between shelf 1 and shelf 2 is shelf aisle A. The open space between shelf 2 and shelf 3 is shelf aisle B. The shelf 1, shelf 2 and the shelf 3 respectively include a plurality of storage positions.

Step 602, in response to determining that there is no corresponding compartment set for the target shelf aisle, determining an adjacent shelf aisle set adjacent to the location of the target shelf aisle.

In some embodiments, the execution subject can determine an adjacent shelf aisle set adjacent to the location of the target shelf aisle in response to determining that there is no corresponding compartment set for the target shelf aisle.

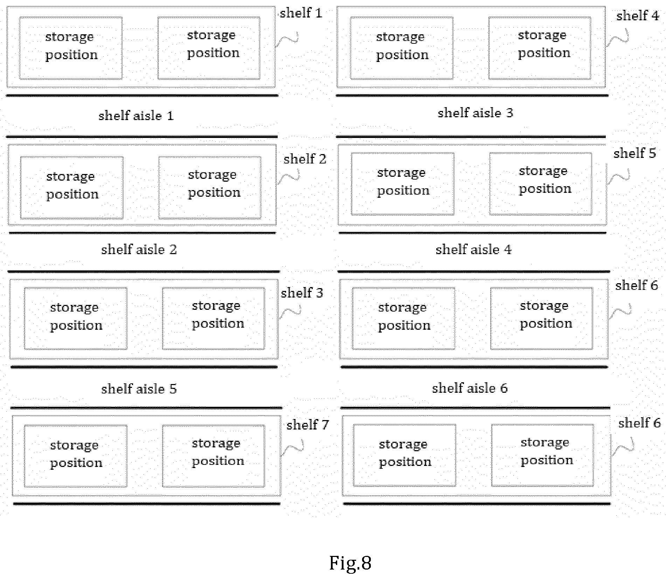

As an example, referring to Fig. 8, a schematic view of adjacent shelf aisle sets is shown.

For the shelf aisle corresponding to shelf aisle 2, the corresponding adjacent shelf aisle set therein may include, but is not limited to, at least one of the following: shelf aisle 1, shelf aisle 3, shelf aisle 4, shelf aisle 5, and shelf aisle 6.

Step 603: determining the compartment corresponding to the adjacent shelf aisle in the adjacent shelf aisle set, as the third target compartment, to obtain the third target compartment set.

In some embodiments, the execution subject can determine the compartment corresponding to the adjacent shelf aisle in the adjacent shelf aisle set, as the third target compartment, to obtain the third target compartment set.

As an example, the execution subject can determine the compartment corresponding to the adjacent shelf aisle in the adjacent shelf aisle set through compartment query, as the third target compartment, to obtain the third target compartment set.

Step 604: in response to determining that there is at least one adjacent compartment in the adjacent compartment set, whose number of articles in the respective container satisfies a predetermined number condition, performing the distribution processing on the articles to be distributed according to the at least one adjacent compartment.

In some embodiments, in response to determining that there is at least one adjacent compartment in the adjacent compartment set, whose number of articles in the respective container satisfies a predetermined number condition, the execution subject can perform the distribution processing on the articles to be distributed according to the at least one adjacent compartment. The adjacent compartment set therein is a set of compartments adjacent to each of the third target compartments in the third target compartment set. The predetermined number condition may be that the number of articles stored in the container does not reach the predetermined number.

**In** some alternative embodiments, after the step 604, the step further includes:
The first step, screening the corresponding compartment set to determine compartments where the number of distributed articles included in the corresponding container is less than a predetermined number of compartments, to obtain at least one compartment, in response to determining that there is corresponding compartment set for the target shelf aisle. **In** practice, the aforesaid predetermined number can be the number of articles that can be stored in the container.

The second step, performing the distribution processing on the articles to be distributed according to the at least one compartment.

As an example, the execution subject can randomly select one compartment from at least one compartment for subsequent distribution processing of the articles to be distributed.

**In** some alternative embodiments, after the step 604, the steps further include:
The first step, in response to determining that there is at least one adjacent compartment, whose number of articles in the respective container satisfies a predetermined number condition, determining the proportion of articles to be distributed corresponding to the target shelf aisle.

The second step, determining the number of article distribution compartments corresponding to the target shelf aisle according to the proportion of articles to be distributed.

As an example, the execution subject can directly multiple the proportion of articles to be distributed by the total number of compartments to generate the number of article distribution compartments corresponding to the target shelf aisle.

The third step, determining a subset of article distribution compartments from the set of article distribution compartments included by the respective container where the distributed articles are empty as the article distribution compartments corresponding to the articles to be distributed. The number of article distribution compartments included in the article distribution compartment subset corresponds to the number of article distribution compartments.

The fourth step, performing the distribution processing on the articles to be distributed based on the article distribution compartment subset.

As an example, the execution subject can randomly select one compartment from article distribution compartment subset for subsequent distribution processing of the articles to be distributed.

In some embodiments, the step of determining the proportion of articles to be distributed corresponding to the target shelf aisle can include the following steps:
The first step, performing grouping on a set of shelf aisles according to the shelf layout of the warehouse to obtain a set of shelf aisle groups. The specific implementation will not be elaborated further.

The second step, determining the number of articles to be distributed corresponding to each shelf aisle group in the set of shelf aisle groups. The specific implementation will not be elaborated further.

The third step, determining the shelf aisle group to which the target shelf aisle belongs, as the target shelf aisle group.

As an example, the execution subject can determine the shelf aisle group to which the target shelf aisle belongs, as the target shelf aisle group through the shelf aisle group query.

The fourth step, determining the proportion of articles to be distributed corresponding to the target shelf aisle group according to the number of articles to be distributed corresponding to the target shelf aisle group, as target proportion of the articles to be distributed. The specific implementation will not be elaborated further.

The fifth step, determining the proportion of articles to be distributed corresponding to the target shelf aisle according to the proportion of the target articles to be distributed. The specific implementation will not be elaborated further.

In some embodiments, the above step of determining the proportion of articles to be distributed corresponding to the target shelf aisle group according to the number of articles to be distributed corresponding to the target shelf aisle group, as target proportion of the articles to be distributed may include the following steps:
The first step, determining a total number of articles to be distributed. The total number of articles to be distributed may be the number of articles included in the set of articles in the same batch as the articles to be distributed. In other words, the period corresponding to the set of articles of the same batch is the same as the period corresponding to the articles to be distributed.

The second step, generating an initial proportion of articles to be distributed corresponding to the target shelf aisle group based on the number of articles to be distributed corresponding to the target shelf aisle group and the total number of articles to be distributed.

As an example, the execution subject can divide the proportion of articles to be distributed corresponding to the target shelf aisle group by the total number of articles to be distributed to obtain an initial proportion of articles to be distributed corresponding to the target shelf aisle group.

The third step, determining the article volume of each article to be distributed in the set of articles to be distributed to obtain a set of article volumes. There is an association between the set of articles to be distributed and the target shelf aisle group.

The fourth step, adjusting the initial proportion of articles to be distributed based on the set of article volumes to obtain an adjusted proportion of articles to be distributed, as the target proportion of articles to be distributed.

As an example, firstly, the execution subject can determine the average volume value of article volume included by the article volume set. Then, the average volume value is multiplied by a preset coefficient to attain the adjusted proportion of articles as proportion of articles corresponding to the target shelf aisle group. For example, the preset coefficient may be 0.4.

In some embodiments, the above step of determining the proportion of articles to be distributed corresponding to the target shelf aisle according to the proportion of target articles to be distributed can include the following steps:
The first step, in response to determining that the target proportion of articles to be distributed is greater than a first predetermined proportion, performing splitting process on the shelf aisle group to obtain at least two shelf aisle subgroups. The proportion of articles to be distributed corresponding to each shelf aisle subgroup therein is less than the first predetermined proportion and greater than the second predetermined proportion. The first predetermined proportion is greater than the second predetermined proportion. For example, the first predetermined proportion may be 80%. The second predetermined proportion may be 10%.

As an example, the execution subject can perform an average splitting process on the above-mentioned target shelf aisle group to obtain two shelf aisle subgroups.

The second step, determining the shelf aisle subgroup to which the target shelf aisle belongs, as the target shelf aisle subgroup.

The third step, determining the proportion of returned articles corresponding to the target shelf aisle subgroup as the proportion of the articles to be distributed corresponding to the target shelf aisle.

In some embodiments, the step further comprises:
The first step, determining an adjacent shelf aisle set adjacent to the location of the target shelf aisle group in response to determining that the target proportion of articles to be distributed is less than the first predetermined proportion.

The second step, determining the adjusted proportion of articles to be distributed corresponding to each adjacent shelf aisle group in the set of adjacent shelf aisle groups, as the adjusted proportion of the adjacent articles to be distributed, so as to obtain a set of adjusted proportions of the adjacent articles to be distributed.

The third step, adding the target proportion of articles to be distributed to each adjusted proportion of the adjacent articles to be distributed in the set of adjusted proportions of the adjacent articles to be distributed to generate a summed proportion.

The fourth step, screening the set of adjacent shelf aisle groups to determine the adjacent shelf aisle groups whose corresponding summed proportion is greater than the second predetermined proportion and less than the summed proportion to obtain at least one adjacent shelf aisle group.

The fifth step, adding the target shelf aisle group to any one of the at least one adjacent shelf aisle group to obtain an added shelf aisle group.

The sixth step, determining the proportion of articles to be distributed corresponding to the added shelf aisle group as the proportion of the articles to be distributed corresponding to the target shelf aisle.

The above various embodiments of this disclosure have the following beneficial effects: through the article distribution method in some embodiments of this disclosure, the handling efficiency of returned articles can be improved by precisely distributing the returned articles.

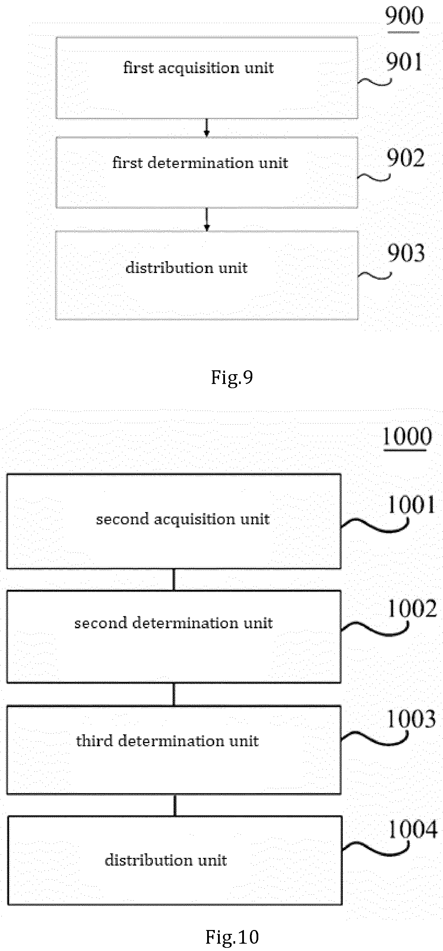

Now referring to Fig. 9, as an implementation of the methods shown in the above figures, this disclosure provides some embodiments of a compartment distribution device for an automatic distribution wall. These device embodiments correspond to the method embodiments shown in Fig. 2, and the compartment distribution device can be specifically applied to various electronic apparatus.

As shown in Fig. 6, a compartment distribution device 900 comprises: a first acquisition unit 901, a first determination unit 902 and a distribution unit 903. The first acquisition unit 601 therein is configured to obtain an article information of a first article, wherein the first article is not assigned a compartment unit, and the article information includes a storage position of the article; the first determination unit 902 is configured to determine a storage position of a second article based on an article information of a second article, wherein the second article has been assigned a compartment unit; the distribution unit 903 is configured to distribute a compartment unit for the first article and making the compartment unit corresponding to the first article adjacent to the compartment unit corresponding to the second article in response to determining that the first article is adjacent to the storage position corresponding to the second article.

In some alternative embodiments, the abovementioned storage position includes: at least one of a shelf aisle and an article storage position; and the distribution unit 903 is configured such that the execution subject can distribute a compartment unit for the first article and make the compartment unit corresponding to the first article adjacent to the compartment unit corresponding to the second article in response to determining that the first article is adjacent to the shelf aisle corresponding to the second article and/or the first article is adjacent to the article storage position corresponding to the second article.

In some alternative embodiments, the above-mentioned compartment unit comprises a set of compartments; and the distribution unit 903 can be configured to: determine at least one compartment unit adjacent to the compartment unit corresponding to the second article; perform the following distribution steps for each of the at least one compartment units: determine the compartment set corresponding to the compartment unit as a first target compartment set; determine a first target compartment subset satisfying a preset storage condition in response to determining that there exist compartments within the first target compartment set whose article storage status satisfies a preset storage condition; distribute a compartment unit for the first article and making the compartment unit corresponding to the first article adjacent to the compartment unit corresponding to the second article according to the at least one first determined target compartment subset.

In some alternative embodiments, the compartment distribution device 900 further comprises: a fourth determination unit and a compartment distribution unit (not shown). The fourth determination unit can be configured to, in response to determining that the first article and the second article belong to the same category, determine whether there is a target compartment in the second target compartment set, whose compartment storage number is less than the corresponding preset number, wherein the second target compartment set is associated with the compartment unit corresponding to the second article. The compartment distribution unit can be configured to determine the compartment unit corresponding to the second article as the compartment unit corresponding to the first article in response to determining there is the target compartment, and distribute the compartment to the first article based on the determined at least one target compartment.

It will be appreciated that the units described in the compartment distribution device 900 correspond to the respective steps in the method described with reference to Fig. 2. Accordingly, the operations, features, and resulting beneficial effects described above with respect to the method are equally applicable to the compartment distribution device 900 and the units contained therein, and will not be repeated herein.

Now referring to Fig. 10, as an implementation of the methods shown in the above figures, this disclosure provides some embodiments of an article distribution device for an automatic distribution wall. These device embodiments correspond to the method embodiments shown in Fig. 6, and the article distribution device can be specifically applied to various electronic apparatus.

As shown in Fig. 10, an article distribution device 1000 comprises: a second acquisition unit 1001, a second determination unit 1002, a third determination unit 1003 and a distribution unit 1004. The second acquisition unit 1001 therein is configured to obtain articles to be distributed, wherein the shelf aisle corresponding to the articles to be distributed is the target shelf aisle; the second determination unit 1002 is configured to determine an adjacent shelf aisle set adjacent to the location of the target shelf aisle in response to determining that there is no corresponding compartment set for the target shelf aisle; the third determination unit 1003 is configured to determine the compartment corresponding to the adjacent shelf aisle in the adjacent shelf aisle set, as the third target compartment, to obtain the third target compartment set; the distribution unit 1004 is configured to perform the distribution processing on the articles to be distributed according to the at least one adjacent compartment in response to determining that there is at least one adjacent compartment in the adjacent compartment set, whose number of articles in the respective container satisfies a predetermined number condition, wherein the adjacent compartment set is a set of compartments adjacent to each of the third target compartments in the third target compartment set.

**In** some alternative embodiments, the compartment distribution device 1000 further comprises: a screening unit and a first distribution processing unit (not shown). The screening unit therein can be configured to screen the corresponding compartment set to determine compartments where the number of distributed articles included in the corresponding container is less than a predetermined number, to obtain at least one compartment, in response to determining that there is corresponding compartment set for the target shelf aisle; the first distribution processing unit can be configured to perform the distribution processing on the articles to be distributed according to the at least one compartment.

**In** some alternative embodiments, the compartment distribution device 1000 further comprises: a fifth determination unit, a sixth determination unit, a seventh determination unit and a second distribution processing unit (not shown). The fifth determination unit therein can be configured to, in response to determining that there is no at least one adjacent compartment, whose number of articles in the respective container satisfies a predetermined number condition, determine the proportion of articles to be distributed corresponding to the target shelf aisle; the sixth determination unit can be configured to determine the number of article distribution compartments corresponding to the target shelf aisle according to the proportion of articles to be distributed; the seventh determination unit can be configured to determine a subset of article distribution compartments from the set of article distribution compartments included by the respective container where the distributed articles are empty as the article distribution compartments corresponding to the articles to be distributed, wherein the number of article distribution compartments included in the article distribution compartment subset corresponds to the number of article distribution compartments; and the second distribution processing unit can be configured to perform the distribution processing on the articles to be distributed based on the article distribution compartment subset.

In some alternative embodiments, the fifth determination unit can be configured to: perform grouping on a set of shelf aisles according to the shelf layout of the warehouse to obtain a set of shelf aisle groups; determine the number of articles to be distributed corresponding to each shelf aisle group in the set of shelf aisle groups; determine the shelf aisle group to which the target shelf aisle belongs, as the target shelf aisle group; determine the proportion of articles to be distributed corresponding to the target shelf aisle group according to the number of articles to be distributed corresponding to the target shelf aisle group as target proportion of the articles to be distributed; determine the proportion of articles to be distributed corresponding to the target shelf aisle according to the target proportion of the articles to be distributed.

In some alternative embodiments, the fifth determination unit can be configured to: determine a total number of articles to be distributed; generate an initial proportion of articles to be distributed corresponding to the target shelf aisle group based on the number of articles to be distributed corresponding to the target shelf aisle group and the total number of articles to be distributed; determine the article volume of each article to be distributed in the set of articles to be distributed to obtain a set of article volumes, wherein there is an article association relationship between the set of articles to be distributed and the target shelf aisle group; adjust the initial proportion of articles to be distributed based on the set of article volumes to obtain an adjusted proportion of articles to be distributed, as the target proportion of articles to be distributed.

In some alternative embodiments, the fifth determination unit can be configured to: in response to determining that the target proportion of articles to be distributed is greater than a first predetermined proportion, perform splitting process on the shelf aisle group to obtain at least two shelf aisle subgroups, wherein the proportion of articles to be distributed corresponding to each warehouse aisle subgroup is less than the first predetermined proportion and greater than the second predetermined proportion; determine the shelf aisle subgroup to which the target shelf aisle belongs, as the target shelf aisle subgroup; determine the proportion of returned articles corresponding to the target shelf aisle subgroup as the proportion of the articles to be distributed corresponding to the target shelf aisle.

In some alternative embodiments, the fifth determination unit can be configured to: determine an adjacent shelf aisle set adjacent to the location of the target shelf aisle group in response to determining that the target proportion of articles to be distributed is less than the first predetermined proportion; determine the adjusted proportion of articles to be distributed corresponding to each adjacent shelf aisle group in the set of adjacent shelf aisle groups, as the adjusted proportion of the adjacent articles to be distributed, so as to obtain a set of adjusted proportions of the adjacent articles to be distributed; add the target proportion of articles to be distributed to each adjusted proportion of the adjacent articles to be distributed in the set of adjusted proportions of the adjacent articles to be distributed to generate a summed proportion; screen the set of adjacent shelf aisle groups to determine the adjacent shelf aisle groups whose corresponding summed proportion is greater than the second predetermined proportion and less than the summed proportion to obtain at least one adjacent shelf aisle group; add the target shelf aisle group to any one of the at least one adjacent shelf aisle group to obtain an added shelf aisle group; determine the proportion of articles to be distributed corresponding to the added shelf aisle group as the proportion of the articles to be distributed corresponding to the target shelf aisle.

It will be appreciated that the units described in the article distribution device 1000 correspond to the respective steps in the method described with reference to Fig. 6. Accordingly, the operations, features, and resulting beneficial effects described above with respect to the method are equally applicable to the article distribution device 1000 and the units contained therein, and will not be repeated herein.

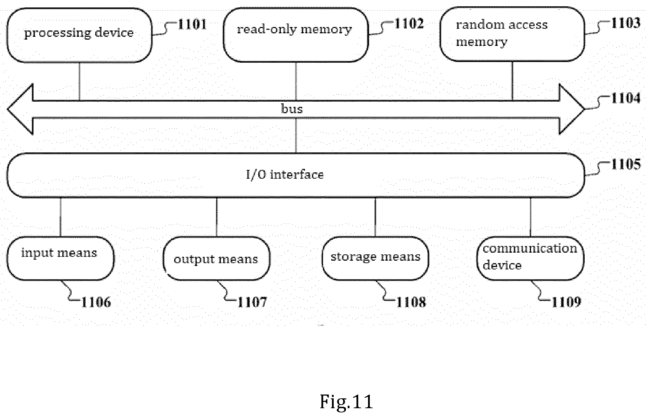

Referring to Fig. 11, a structural schematic view of an electronic apparatus (such as the electronic apparatus 101 in Fig. 1) 1100 suitable for implementing some embodiments of this disclosure. The electronic apparatus as shown in Fig. 11 is merely an example and should not impose any limitations on the functionality and scope of use of the embodiments of this disclosure.

As shown in Fig. 11, the electronic apparatus 1100 can include a processing device (e.g., a central processing unit, a graphics processor, etc.) 1101 that may perform various actions and processes based on programs stored in the read-only memory 1102 or loaded into the random access memory 1103 from the storage device 1108. In the random access memory 1103, various programs and data required for operation of the electronic device 1100 are also stored. The processing device 1101, the read-only memory 1102, and the random access memory 1103 are connected to each other via a bus 1104. I/O interface 1105 is also connected to the bus 1104.

Usually, the following devices may be connected to the I/O interface 1105: input means 1106 including, for example, a touch screen, a touch pad, a keyboard, a mouse, a camera, a microphone, an accelerometer, a gyroscope, etc.; output means 1107 including, for example, a Liquid Crystal Display (LCD), a loudspeaker, a vibrator, etc.; storage means 1108 including, for example, a magnetic tape, a hard disk, etc.; and communication means 1109. The communication device 1109 can allow the electronic device 1100 to communicate wirelessly or wiredly with other devices to exchange data. Although Fig. 11 illustrates an electronic apparatus 1100 having various means, it will be appreciated that it is not compulsory to implement or possess all of the illustrated means. More or fewer means may be alternatively implemented or possessed. Each block shown in Fig. 11 may represent one device, or may represent multiple devices as desired.

Specifically, according to some embodiments of this disclosure, the processes described above with reference to the flowcharts can be implemented as computer software programs. For example, some embodiments of this disclosure include a computer program product that includes a computer program carried on a computer-readable medium, and the computer program contains program code for executing the method shown in the flowchart. In some such embodiments, the computer program may be downloaded and installed from the network via the communication device 1109, either from the storage device 1108, or from the read-only memory 1102. When the computer program is executed by the processing device 1101, the functions defined in the method of some embodiments of this disclosure are performed.

It should be noted that, in some embodiments of this disclosure, the above-mentioned computer-readable medium may be a computer-readable signal medium or a computer-readable storage medium, or any combination of the two. A computer-readable storage medium may be, for example, but is not limited to, an electronic, magnetic, optical, electromagnetic, infrared, or semiconductor system, device, or means, or any combination of the foregoing. More specific examples of the computer-readable storage medium may include, but are not limited to, an electrical connection having one or more wires, a portable computer diskette, a hard disk, a Random Access Memory (RAM), a Read-Only memory (ROM), an erasable programmable read-only memory (EPROM or flash memory), an optical fiber, a portable compact disc read-only memory (CD-ROM), an optical storage means, a magnetic storage means, or any suitable combination of the foregoing. In some embodiments of this disclosure, the computer-readable storage medium may be any tangible medium that contains or stores a program for use by or in combination with an instruction execution system, device, or means. Besides, in some embodiments of this disclosure, the computer-readable signal medium may include a data signal with computer-readable program code embodied therein, which is propagated in baseband or as part of a carrier wave. Such a propagated data signal may take a variety of forms, including, but not limited to, electro-magnetic signal, optical signal, or any suitable combination thereof. A computer-readable signal medium can be any computer-readable medium other than a computer-readable storage medium. The computer-readable signal medium can send, propagate, or transmit a program for use by or in conjunction with an instruction-execution system, apparatus, or device. Program code embodied on a computer-readable medium may be transmitted with any appropriate medium, including, but not limited to, electrical wires, optical cables, RF (radio frequency), etc., or any suitable combination thereof.

In some embodiments, clients and servers may communicate by means of any currently known or future developed network Protocol, such as HTTP (Hypertext Transfer Protocol), and may be interconnected with digital data communication (e.g., a communication network) in any form or medium. Examples of communication network include a Local Area Network ("LAN"), a Wide Area Network ("WAN"), an interconnection network (e.g., the Internet), and an end-to-end network (e.g., ad hoc end-to-end network), as well as any currently known or future developed network.

The computer-readable medium may be contained in the electronic device, or may stand alone and not be assembled into such electronic device. The above computer-readable medium carries one or more programs. When the one or more programs are executed by the electronic device, the electronic device will: obtain an article information of a first article, wherein the first article is not assigned a compartment unit, and the article information includes a storage position of the article; determine a storage position of a second article based on an article information of a second article, wherein the second article has been assigned a compartment unit; distribute a compartment unit for the first article and make the compartment unit corresponding to the first article adjacent to the compartment unit corresponding to the second article in response to determining that the first article is adjacent to the storage position corresponding to the second article. obtain articles to be distributed, wherein the shelf aisle corresponding to the articles to be distributed is the target shelf aisle; determining an adjacent shelf aisle set adjacent to the location of the target shelf aisle in response to determining that there is no corresponding compartment set for the target shelf aisle; determining the compartment corresponding to the adjacent shelf aisle in the adjacent shelf aisle set, as the third target compartment, to obtain the third target compartment set; in response to determining that there is at least one adjacent compartment in the adjacent compartment set, whose number of articles in the respective container satisfies a predetermined number condition, performing the distribution processing on the articles to be distributed according to the at least one adjacent compartment, wherein the adjacent compartment set is a set of compartments adjacent to each of the third target compartments in the third target compartment set.

Computer program code for carrying out operations of some embodiments of this disclosure may be written in any one or more programming languages or combination thereof, the programming languages including, object-oriented programming languages, such as Java, Smalltalk, C++, and also including conventional procedural programming languages, such as the "C" language or similar programming languages. The program code may be executed entirely on a user's computer, partly on a user's computer, as a stand-alone software package, partly on a user's computer and partly on a remote computer, or entirely on a remote computer or server. In the cases where a remote computer is involved, the remote computer may be connected to the user's computer through any type of network, including a Local Area Network (LAN) or a Wide Area Network (WAN), or may be made to an external computer (for example, through the Internet using an Internet service provider).

The flowchart and block diagrams in the accompanying drawings illustrate the architecture, functionality, and operation of possible implementations of systems, methods and computer program products according to various embodiments of the present disclosure. In this regard, each block in the flowchart or block diagrams may represent a module, program segment, or a part of code, which comprises one or more executable instructions for implementing the specified logical function(s). It should also be noted that, in some alternative implementations, the functions noted in the block may occur in an order different from what is noted in the drawings. For example, two blocks shown in succession may, in fact, be executed substantially concurrently, or the blocks may sometimes be executed in the reverse order, depending on the function involved. It should also be noted that each block in the block diagram and/or flowchart, as well as the combination of blocks in the block diagram and/or flowchart, can be implemented by a dedicated hardware-based system that performs the specified functions or operations, or can be implemented by a combination of dedicated hardware and computer instructions.

The concerned units as described in some embodiments of this disclosure may be implemented by software or hardware. The described units can also be provided within a processor. For example, it can be described as: a processor includes a first acquisition unit, a first determination unit, and a distribution unit. The names of these units therein do not constitute a limitation on the unit itself in some cases, for example, the first acquisition unit can also be described as "a unit that acquires article information of the first article".

The functions described herein above may be implemented, at least in part, by one or more hardware logic components. As a nonrestrictive example, exemplary types of hardware logic components that may be used include field Programmable Gate Arrays (FPGAs), Application Specific Integrated Circuits (ASICs), Application Specific Standard Products (ASSPs), system on a chip (SOCs), Complex Programmable Logic Devices (CPLDs), and the like.

Some embodiments of this disclosure further provide a computer program product, comprising a computer program, wherein any one of the compartment distribution method or article distribution method is achieved when the computer program is executed by a processor.

The above description is only some of the preferred embodiments of this disclosure and an illustration of the principles of the technology employed. It should be understood by those skilled in the art that the scope of the invention referred to in the embodiments of this disclosure is not limited to the technical solutions formed by specific combinations of the above technical features, but should also cover other technical solutions formed by any combination of the above technical features or their equivalent without departing from the above inventive concepts. For example, the above features are interchanged with (but not limited to) technical features having similar functions disclosed in the embodiments of this disclosure.

## Claims

1. A method for distributing compartments of an automatic distribution wall, comprising:
obtaining an article information of a first article, wherein the first article is not assigned a compartment unit, and the article information comprises a storage position of the article;
determining a storage position of a second article based on an article information of a second article, wherein the second article has been assigned a compartment unit;
distributing a compartment unit for the first article and making the compartment unit corresponding to the first article adjacent to the compartment unit corresponding to the second article in response to determining that the first article is adjacent to the storage position corresponding to the second article.

2. The method according to claim 1, wherein the storage position comprises: at least one of a shelf aisle and an article storage position; and
the step of distributing a compartment unit for the first article and making the compartment unit corresponding to the first article adjacent to the compartment unit corresponding to the second article in response to determining that the first article is adjacent to the storage position corresponding to the second article comprises:
distributing a compartment unit for the first article and making the compartment unit corresponding to the first article adjacent to the compartment unit corresponding to the second article in response to determining that the first article is adjacent to the shelf aisle corresponding to the second article and/or the first article is adjacent to the article storage position corresponding to the second article.

3. The method according to claim 1, wherein the compartment unit comprises a set of compartments; and
the step of distributing a compartment unit for the first article and making the compartment unit corresponding to the first article adjacent to the compartment unit corresponding to the second article in response to determining that the first article is adjacent to the storage position corresponding to the second article comprises:
determining at least one compartment unit adjacent to the compartment unit corresponding to the second article;
for each of the at least one compartment units, performing the following distribution steps:
determining the compartment set corresponding to the compartment unit as a first target compartment set;
determining a first target compartment subset satisfying a preset storage condition in response to determining that there exists a compartment within the first target compartment set whose article storage status satisfies a preset storage condition;
distributing a compartment unit for the first article and making the compartment unit corresponding to the first article adjacent to the compartment unit corresponding to the second article according to the at least one first determined target compartment subset.

4. The method according to claim 1, wherein the compartment units corresponding to a warehouse are divided by the following steps:
performing preliminary grouping on a set of shelf aisles according to the shelf layout of the warehouse to obtain a set of shelf aisle groups;
for each shelf aisle group in the set of shelf aisle groups, performing the following determination steps:
determining the proportion of articles to be distributed corresponding to the shelf aisle group;
determining whether to adjust the aisles in the shelf aisle group according to the proportion of articles to be distributed;
in response to determining not to adjust, determining the number of compartments for the shelf aisle group as a target compartment number according to the proportion of articles to be distributed; and
determining at least one target compartment as a compartment unit, wherein the number of compartments corresponding to the at least one target compartment is the number of the target compartments.

5. The method according to claim 4, wherein after the step of determining the number of compartments for the shelf aisle group as a target compartment number according to the proportion of articles to be distributed in response to determining not to adjust, the method further comprises the following steps:
in response to determining to adjust and determining that the proportion of articles to be distributed is greater than a first predetermined proportion, performing aisle area splitting or aisle division on the shelf aisle group to obtain at least one shelf aisle splitting area, wherein the proportion of articles to be distributed corresponding to each shelf aisle splitting area is between a second predetermined proportion and the first predetermined proportion, and the first predetermined proportion is greater than the second predetermined proportion;
in response to determining to adjust and determining that the proportion of articles to be distributed is less than the second predetermined proportion, merging the shelf aisle group with an adjacent shelf aisle group such that the proportion of articles to be distributed corresponding to the merged aisle group is between the second predetermined proportion and the first predetermined proportion.

6. The method according to claim 4, wherein the step of determining the proportion of articles to be distributed corresponding to the shelf aisle group comprises:
determining a total number of articles to be distributed;
generating an initial proportion of articles to be distributed corresponding to the shelf aisle group based on the number of articles to be distributed corresponding to the shelf aisle group and the total number of articles to be distributed;
determining the article volume of each article to be distributed in the respective set of articles to be distributed to obtain a set of article volumes;
Adjusting the initial proportion of articles to be distributed based on the set of article volumes to obtain an adjusted proportion of articles to be distributed, as the target proportion of articles to be distributed.

7. The method according to claim 1, wherein the method further comprises:
in response to determining that the first article and the second article belong to the same category, determining whether there exists a target compartment in the second target compartment set, whose compartment storage number is less than the corresponding preset number, wherein the second target compartment set is associated with the compartment unit corresponding to the second article;
determining the compartment unit corresponding to the second article as the compartment unit corresponding to the first article in response to determining there exists the target compartment, distributing the target compartment for the first article based on the determined at least one target compartment.

8. A method for distributing articles to an automatic distribution wall, comprising:
obtaining articles to be distributed, wherein the shelf aisle corresponding to the articles to be distributed is the target shelf aisle;
determining an adjacent shelf aisle set adjacent to the location of the target shelf aisle in response to determining that there is no a set of compartments corresponding for the target shelf aisle;
determining the compartment corresponding to the adjacent shelf aisle in the adjacent shelf aisle set, as the third target compartment, to obtain the third target compartment set; and
in response to determining that there is at least one adjacent compartment in the adjacent compartment set, whose number of articles in the respective container satisfies a predetermined number condition, performing the distribution processing on the articles to be distributed according to the at least one adjacent compartment, wherein the adjacent compartment set is a set of compartments adjacent to each of the third target compartments in the third target compartment set.

9. The method according to claim 8, wherein the method further comprises:
screening the corresponding compartment set to determine compartments where the number of distributed articles included in the corresponding container is less than a predetermined number of compartments, to obtain at least one compartment, in response to determining that there is corresponding compartment set for the target shelf aisle;
performing the distribution processing on the articles to be distributed according to the at least one compartment.

10. The method according to claim 8, wherein the method further comprises:
in response to determining that there is no at least one adjacent compartment, whose number of articles in the respective container satisfies a predetermined number condition, determining the proportion of articles to be distributed corresponding to the target shelf aisle;
determining the number of article distribution compartments corresponding to the target shelf aisle according to the proportion of articles to be distributed;
determining a subset of article distribution compartments from the set of article distribution compartments included by the respective container where the distributed articles are empty as the article distribution compartments corresponding to the articles to be distributed, wherein the number of article distribution compartments included in the article distribution compartment subset corresponds to the number of article distribution compartments; and
performing the distribution processing on the articles to be distributed based on the article distribution compartment subset.

11. The method according to claim 10, wherein the step of determining the proportion of articles to be distributed corresponding to the target shelf aisle comprises:
performing grouping on a set of shelf aisles according to the shelf layout of the warehouse to obtain a set of shelf aisle groups;
determining the number of articles to be distributed corresponding to each shelf aisle group in the set of shelf aisle groups;
determining the shelf aisle group to which the target shelf aisle belongs, as a target shelf aisle group;
determining the proportion of articles to be distributed corresponding to the target shelf aisle group according to the number of articles to be distributed corresponding to the target shelf aisle group, as a target proportion of the articles to be distributed;
determining the proportion of articles to be distributed corresponding to the target shelf aisle according to the proportion of the target articles to be distributed.

12. The method according to claim 11, wherein the step of determining the proportion of articles to be distributed corresponding to the target shelf aisle group according to the number of articles to be distributed corresponding to the target shelf aisle group, as a target proportion of the articles to be distributed, comprises:
determining a total number of articles to be distributed;
generating an initial proportion of articles to be distributed corresponding to the target shelf aisle group based on the number of articles to be distributed corresponding to the target shelf aisle group and the total number of articles to be distributed;
determining the article volume of each article to be distributed in the set of articles to be distributed to obtain a set of article volumes, wherein there is an article association relationship between the set of articles to be distributed and the target shelf aisle group;
adjusting the initial proportion of articles to be distributed based on the set of article volumes to obtain an adjusted proportion of articles to be distributed, as the target proportion of articles to be distributed.

13. The method according to claim 11, wherein the step of determining the proportion of articles to be distributed corresponding to the target shelf aisle according to the target proportion of the articles to be distributed comprises:
in response to determining that the target proportion of articles to be distributed is greater than a first predetermined proportion, performing splitting process on the shelf aisle group to obtain at least two shelf aisle subgroups, wherein the proportion of articles to be distributed corresponding to each warehouse aisle subgroup is less than the first predetermined proportion and greater than the second predetermined proportion;
determining the shelf aisle subgroup to which the target shelf aisle belongs, as the target shelf aisle subgroup;
determining the proportion of returned articles corresponding to the target shelf aisle subgroup as the proportion of the articles to be distributed corresponding to the target shelf aisle.

14. The method according to claim 13, wherein the method further comprises:
determining an adjacent shelf aisle set adjacent to the location of the target shelf aisle group in response to determining that the target proportion of articles to be distributed is less than the first predetermined proportion;
determining the adjusted proportion of articles to be distributed corresponding to each adjacent shelf aisle group in the set of adjacent shelf aisle groups, as the adjusted proportion of the adjacent articles to be distributed, so as to obtain a set of adjusted proportions of the adjacent articles to be distributed;
adding the target proportion of articles to be distributed to each adjusted proportion of the adjacent articles to be distributed in the set of adjusted proportions of the adjacent articles to be distributed to generate a summed proportion;
screening, from the set of adjacent shelf aisle groups, the adjacent shelf aisle groups whose corresponding summed proportion is greater than the second predetermined proportion and less than the summed proportion to obtain at least one adjacent shelf aisle group;
adding the target shelf aisle group to any one of the at least one adjacent shelf aisle group to obtain an added shelf aisle group;
determining the proportion of articles to be distributed corresponding to the added shelf aisle group as the proportion of the articles to be distributed corresponding to the target shelf aisle.

15. A compartment distribution device for an automatic distribution wall, comprising:
a first acquisition unit configured to obtain an article information of a first article, wherein the first article is not assigned a compartment unit, and the article information comprises a storage position of the article;
a first determination unit configured to determine a storage position of a second article based on an article information of a second article, wherein the second article has been assigned a compartment unit;
a distribution unit configured to distribute a compartment unit for the first article and making the compartment unit corresponding to the first article adjacent to the compartment unit corresponding to the second article in response to determining that the first article is adjacent to the storage position corresponding to the second article.

16. An article distribution device for an automatic distribution wall, comprising:
a second acquisition unit configured to obtain articles to be distributed, wherein the shelf aisle corresponding to the articles to be distributed is the target shelf aisle;
a second determination unit configured to determine an adjacent shelf aisle set adjacent to the location of the target shelf aisle in response to determining that there is no corresponding compartment set for the target shelf aisle;
a third determination unit configured to determine the compartment corresponding to the adjacent shelf aisle in the adjacent shelf aisle set, as the third target compartment, to obtain the third target compartment set; and
a distribution unit configured to perform the distribution processing on the articles to be distributed according to the at least one adjacent compartment in response to determining that there is at least one adjacent compartment in the adjacent compartment set, whose number of articles in the respective container satisfies a predetermined number condition, wherein the adjacent compartment set is a set of compartments adjacent to each of the third target compartments in the third target compartment set.

17. An electronic apparatus, comprising:
one or more processors;
a storage device, on which one or more programs are stored;
when the one or more programs are executed on one or more processors, the one or more processors are configured to perform the method of any one of claims 1 to 14.

18. A computer-readable medium, on which a computer program is stored, wherein when the computer program is executed by a processor, the method according to any one of claims 1 to 14 is implemented.

19. A computer program product, comprising a computer program, wherein when the computer program is executed by a processor, the method according to any one of claims 1 to 14 is implemented.
